# EUROPEAN PATENT APPLICATION

(11) **EP 4 803 346 A1**
(43) Date of publication of application: **09.09.2026**
(21) Application number: 26160174.4
(22) Date of filing: 23.02.2026
(51) Int. Cl.: B60L 3/00, B60L 50/64, B60L 58/21, B60L 58/26, H01M 10/04, H01M 50/138, H01M 50/147, H01M 50/183, H01M 50/202, H01M 50/249, H01M 50/35, H01M 50/358, H01M 50/367, H01M 50/375

(54) **THERMOREGULATION SYSTEM FOR AN ELECTRIC BATTERY GROUP PROVIDED WITH A SHIELD FOR PROTECTION IN CASE OF THERMAL RUNAWAY OF ONE OR MORE CELLS**

(30) Priority: 07.03.2025 IT 202500004752
(71) Applicant: C.R.F. Società Consortile per Azioni, 10043 Orbassano (Torino) (IT)
(72) Inventor: GARGANO, Marcello, I-10043 Orbassano (Torino) (IT); RICCO, Raffaele, I-10043 Orbassano (Torino) (IT); LORUSSO, Eligio, I-10043 Orbassano (Torino) (IT); MAZZARELLA, Carlo, I-10043 Orbassano (Torino) (IT)
(74) Representative: Buzzi, Notaro & Antonielli d'Oulx S.p.A.

(57) **Abstract**

An electric battery unit (1), comprising an array of battery cells (2) arranged side by side within a housing (4) of the battery unit, wherein each cell (2) comprises an external housing (6) provided with a vent valve (17) configured to allow the exit from the housing of gases formed inside the cell when said gases exceed a predetermined pressure and/or a predetermined temperature, following the cell entering a thermal runaway condition, and wherein said housing (4) of the battery unit comprises a venting device, configured to rupture or deform so as to leave free a vent opening (18) provided in a wall (20, 26) of the housing (4) in case the pressure and/or temperature inside the housing (4) exceed predetermined threshold values. The battery unit (1) comprises a shield (34, 47, 62) disposed within said housing (4) and extending facing said vent opening (18) of the housing (4) in an intermediate position between the vent opening (18) and the cell (2) of said array of battery cells closest to said vent opening (18), in such a way that, when said venting device ruptures or deforms, said shield (34, 47, 62) defines, together with the walls (20, 26) of said housing (4), a passage (44, 54) for the gases, coming from said vent valves (17) and directed towards said vent opening (18) of the housing (4), spaced apart from the battery cell (2) closest to the vent opening (18).

## Description

### Field of the invention

The present invention relates to an electric battery group, in particular to an electric battery group usable for powering electric traction motors and for electric or hybrid vehicles.

Even more particularly, the invention concerns a battery group of the type comprising an array of battery cells arranged side by side within a battery group housing,
wherein each cell comprises an external housing provided with a vent valve configured to allow the exit from the housing of gases formed inside the cell when said gases exceed a predetermined pressure and/or a predetermined temperature, following the cell entering a thermal runaway condition,
wherein said battery group housing comprises a venting device, configured to rupture or deform so as to leave free an opening provided in a wall of the housing in case the pressure and/or temperature inside the housing exceed predetermined threshold values.

### Prior art

Electric battery groups having the characteristics indicated above are known and have been used for some time.

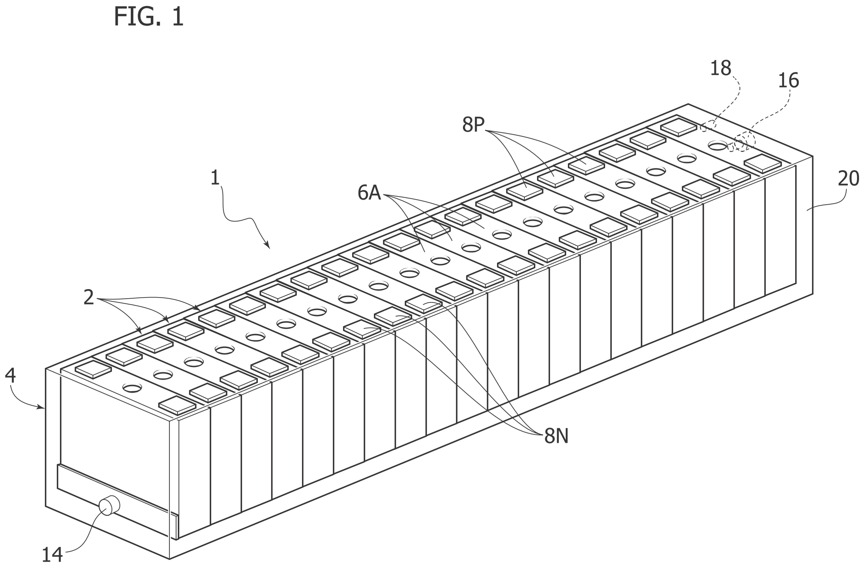

Figures 1 to 3B of the attached drawings refer to a single battery module of a per se known type, indicated in its entirety by reference numeral 1, including a single group of cells 2 arranged side by side. A battery pack can generally comprise a plurality of battery modules of this type, each provided with a respective container 4 and arranged within a common external housing. The invention is, however, also applicable to battery packs, wherein a plurality of battery cells is arranged within a common housing.

Also known in the art are battery groups solutions wherein the battery cells can have different geometries, for example prismatic, cylindrical, or pouch type (so-called "pouch cells").

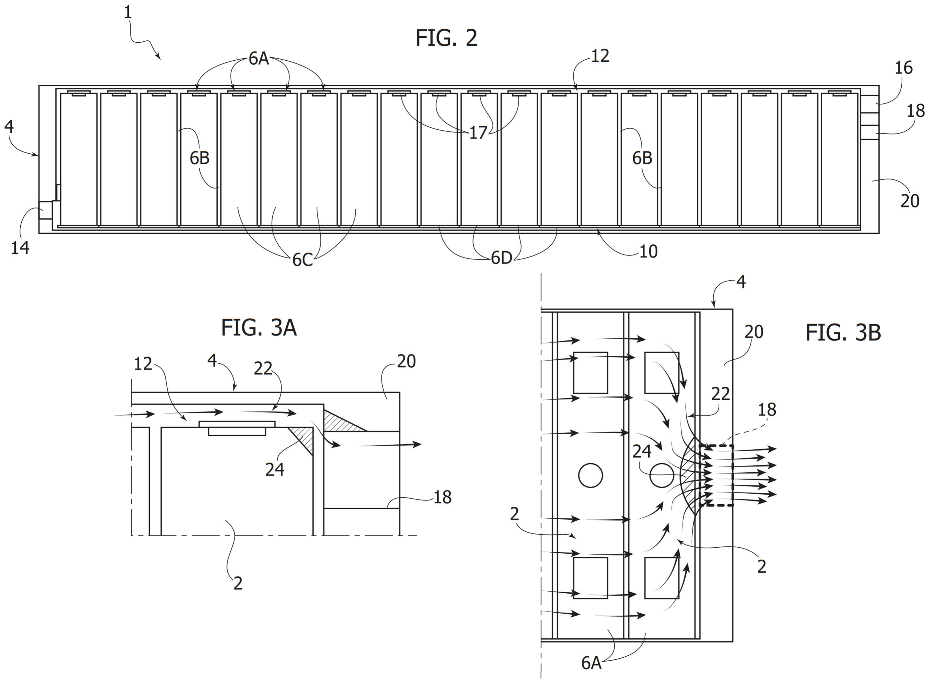

In the exemplary prior art solution illustrated in the figures, the battery cells 2 are prismatic-type cells including a casing 6 with a top wall 6A, from which the positive and negative poles or "tabs" 8P and 8N of the cell 2 protrude, two main walls 6B (figure 2), two end walls 6C (only one of which is visible in figure 2) and a bottom wall 2D.

It is also known in the art to provide thermoregulation systems configured such that, during the use of the electric vehicle, the battery cells are always at a temperature contained within a predetermined range, typically between a minimum threshold of -10°C and a maximum threshold of 55° C. In fact, the battery cells used in electric vehicles are typically lithium-ion battery cells, which tend to generate heat as a result of the chemical reaction that occurs inside the battery cells during operation, and also due to the Joule effect, caused by the passage of current inside the battery. The term "battery operation" here means both the battery charging process and the discharging process, which typically occurs during vehicle travel. It is necessary to consider that the most critical battery operating conditions are those related to the fast-charging process, i.e., charging the battery in a time of less than one hour.

By way of example only, and with reference to figures 1 to 3B, said thermoregulation systems can be of the immersion type, in which the battery cells 2 are immersed in a flow of a dielectric thermoregulating liquid, for example an oil, and wherein the container 4 defines internally an inlet collector chamber 10 disposed below the cells 2, and an outlet collector chamber 12 arranged above the cells 2. In such systems, the container 4 has an inlet 14 for the thermoregulating liquid, generally disposed below the cells 2, and an outlet 16 for the thermoregulating liquid, generally arranged above the cells 2, communicating respectively with the inlet collector chamber 10 and with the outlet collector chamber 12.

Generally, the inlet 14 is always arranged below the cells 2, while the outlet 16 is arranged above the cells 2, to allow any air bubbles formed within the liquid to be collected in the upper collector chamber. However, this layout is not the only possible one; the inlet and outlet can be swapped with each other when an inlet pressure can be guaranteed to avoid any form of liquid evaporation.

The present invention is, however, also applicable to battery units comprising different per se known thermoregulation systems, such as for example air thermoregulation systems or systems comprising thermoregulation plates traversed by a thermoregulation fluid and arranged in thermal exchange with the battery cells.

As anticipated above, it is of fundamental importance to keep the temperature of the battery cells below a maximum temperature, for example around 55°C.

Indeed, exceeding this temperature value exposes the battery cells to the risk of entering a so-called thermal runaway condition, corresponding to the triggering of chemical reactions inside the battery cell that release gases and cause the internal temperature and pressure of the cell to rise uncontrollably, with the further risk of cell rupture or explosion.

To overcome this drawback, known battery cells are generally each provided with a venting valve 17 (see figure 2) configured to allow the exit from the housing of gases formed inside the cell in case it has entered a thermal runaway condition.

However, the opening of these vent valves of the battery cells results in a discharge of such gases, which can generally reach temperatures on the order of 800°C, into the environment defined by the container 4 within which the cells 2 are received.

In order to prevent exposure to such hot gases exiting from the vent valves 17 of the cells from favoring the entry into a thermal runaway condition of the other cells of the module (so-called *thermal runaway propagation),* known battery units are generally provided with a venting device, for example a rupture disc or *burst disk,* configured to rupture or deform so as to leave free an opening provided in a wall of the housing in case the pressure and/or temperature inside the housing exceed predetermined threshold values. In this way, it is possible to release the hot gases coming from inside the battery cells 2 into an environment external to the battery unit.

Such solutions are not, however, free from drawbacks.

In fact, with particular reference to figures 2 to 3B, which illustrate a configuration of a battery unit in which the opening 18 is made in correspondence with a side wall 20 of the container 4, the hot gases exiting from a battery cell that has entered a thermal runaway condition tend to flow towards the opening 18 left free by the rupture or deformation of the venting device.

In particular, said hot gases flow above the battery cells according to flow lines 22 distributed across the width of the container 4, and then converge towards the opening 18.

The convergence of hot gases in a restricted area such as the opening 18 results in an excessive thermal load on the battery cell 2 closest to the opening 18, which in the illustrated example is an end cell of the cell array, with the risk that this battery cell also enters a thermal runaway condition.

In this regard, figures 3A and 3B illustrate the flow lines 22 of the hot gases, coming from a battery cell in thermal runaway, in proximity to the opening 18 of the container 4. As can be observed, the convergence of the flow lines 22 determines a greater thermal stress on the last battery cell of the array (reference numeral 24 indicates the area of the cell most stressed).

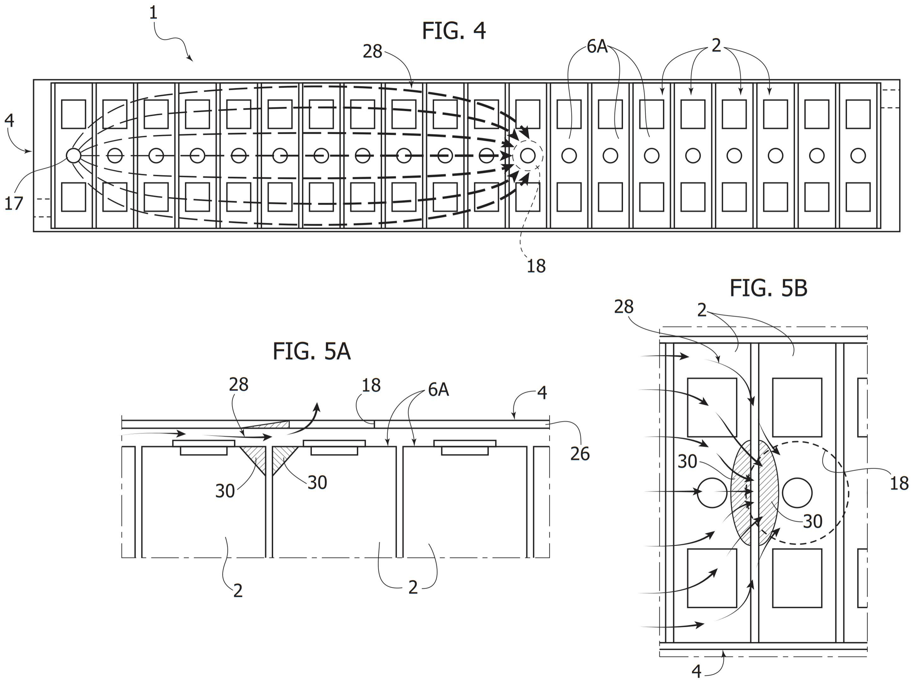

Figures 4 to 5B illustrate a battery group substantially similar to that described with reference to figures 1 to 3B, wherein the opening 18 of the container 4 for the outflow of hot gases to the external environment is made in correspondence with a top wall 26 of the container 4 (see figure 5A).

Even in configurations of this type, the entry of a battery cell into a thermal runaway condition results in a convergence of the hot gases exiting therefrom towards the opening 18, exposing the battery cells 2 closest to the opening 18 to high thermal stresses.

In particular, in the illustrated example, the battery cells 2 most stressed are those having their respective top walls 6A directly facing the opening 18.

In this regard, figures 5A and 5B illustrate the flow lines 28 of the hot gases, coming from a battery cell in thermal runaway, in proximity to the opening 18 of the container 4. As can be observed, the convergence of the flow lines 22 determines a greater thermal stress on the battery cells directly facing the opening 18 or adjacent to it (reference numeral 30 indicates the areas of the cells most stressed).

In view of the above, a limitation of the known solutions in this field concerns the possibility of making the hot gases flow outside the battery unit housing, following the entry of a cell into a thermal runaway condition, without thermally stressing other battery cells of the module, exposing them to the risk of malfunctions triggering a thermal runaway propagation.

A battery group having the features indicated in the preamble of claim 1 is known from documents WO 2024/067982 A1 e WO2023/180428 A1.

### Object of the invention

It is therefore an object of the invention to produce an electric battery group, in particular an electric battery group for powering an electric traction motor of an electric or hybrid vehicle, which is free from the problems indicated above.

In particular, an object of the present invention is to produce an electric battery group such that, when one or more battery cells are in a thermal runaway condition and the venting device provided on the housing leaves free an opening on a wall of the housing for the passage of said gases to the outside, the gases exiting from the cell or cells in thermal runaway do not thermally stress the battery cells in proximity to the opening, so as to avoid triggering a phenomenon of thermal runaway propagation.

A further object of the invention is to achieve said objectives with relatively simple and low-cost means.

### Summary of the invention

In view of achieving one or more of the aforementioned objects, the invention has as its subject an electric battery group of the type indicated above and comprising a shield disposed within the housing and extending facing the opening of the housing in an intermediate position between the opening and the cell of the array of battery cells closest to the opening, in such a way that, when the venting device ruptures or deforms, the shield defines, together with the walls of the housing, a flow path for the gases, exiting from the vent valves and directed towards the opening of the housing, spaced apart from the battery cell closest to the vent opening.

Thanks to said characteristics, it becomes possible to move away from the battery cells closest to the opening of the housing the area where the flow lines of the hot gases exiting from the vent valves of the battery cells converge before exiting the opening made on the housing, thereby avoiding an excessive thermal load on such cells and a consequent propagation of the thermal runaway phenomenon.

### Detailed description of the invention

Further characteristics and advantages of the invention will become apparent from the following description with reference to the attached drawings, provided by way of non-limiting example only, wherein:
- figure 1 is a perspective view of a first example of a battery group according to the prior art,
- figure 2 is a side view of the battery group of figure 1,
- figures 3A, 3B are enlarged scale views of an opening of the housing of the battery group of figure 1, in which the flow lines of gases coming from one or more battery cells are highlighted,
- figure 4 is a plan view of a second example of a battery unit according to the prior art,
- figures 5A, 5B are enlarged scale views of an opening of the housing of the battery group of figure 4, in which the flow lines of gases coming from one or more battery cells are highlighted,
- figure 6 is a perspective view of a battery group according to a first embodiment of the present invention,
- figure 7 is an enlarged perspective view of a battery group according to the embodiment of figure 6,
- figure 8A is an enlarged side view of the battery group according to the embodiment of figure 6,
- figure 8B is an enlarged plan view of the battery group according to the embodiment of figure 6
- figure 9 is a perspective view of a battery group according to an alternative embodiment of the present invention,
- figure 10 is an enlarged side view of the battery group according to the embodiment of figure 8,
- figure 11 is a perspective view of a battery group according to an alternative embodiment of the present invention,
- figure 12 is a perspective view of an isolated component of the battery group according to the embodiment of figure 10,
- figure 13 is an enlarged side view of the battery group according to the embodiment of figure 10.

### Detailed description of the invention

The figures 1 to 5B relating to the prior art have already been described above.

In the following description, for simplicity, the numerical references assigned to the components of the battery unit 1 described above and illustrated in figures 1 to 5B will be maintained, for which the same meaning and validity of the same description are intended.

In other words, in the following of the present description, new references will be assigned to components not yet described or to substantially different components subject to specific description and according to the invention.

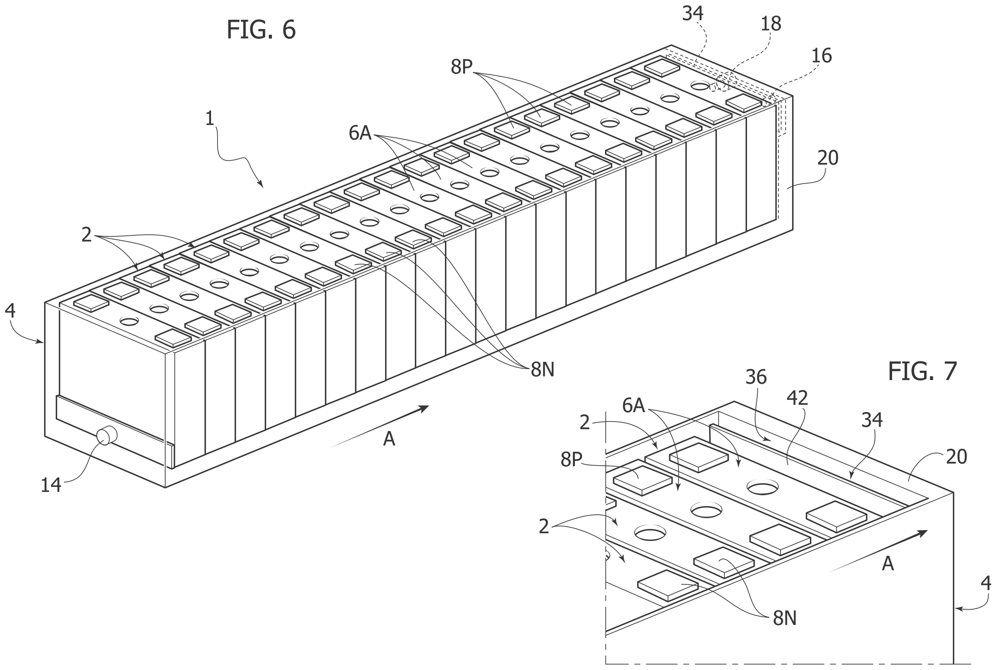

With particular reference to figures 6 to 8B, reference numeral 1 indicates a battery unit according to the present invention having a configuration substantially analogous to that illustrated with reference to figures 1 to 3B.

In particular, the battery unit 1 comprises a container 4 within which an array of battery cells 2 arranged side by side is received.

In the illustrated embodiment, the battery cells 2 are prismatic-type cells including a casing 6 with a top wall 6A, from which the positive and negative poles or "tabs" 8P and 8N of the cell 2 protrude, two main walls 6B (figure 2), two end walls 6C (only one of which is visible in figure 2) and a bottom wall 2D.

In this example, the battery cells 2 are arranged in an ordered array extending along a first direction A, so as to have their respective main walls 6B orthogonal to the first direction A

However, embodiments wherein the battery cells have different geometries, for example a cylindrical geometry or a pouch geometry (so-called *pouch cells)* per se known are not excluded.

The housing of each battery cell further comprises a respective venting valve 17, which in the illustrated example is disposed in correspondence with the top wall 6A of the casing 6 facing towards the top wall of the container 4, and configured to allow an outflow of gases produced inside the cell, for example following the cell entering a thermal runaway condition, when the gases reach a pressure and/or temperature value higher than a predetermined threshold value.

Again with reference to figures 6 to 8B, in a per se known manner, the battery unit 1 comprises a thermoregulation system of the battery cells configured to maintain the temperature of the battery cells 2 within a predetermined temperature range, generally not lower than -10°C and not higher than 50°C.

In the illustrated example, the cell thermoregulation system is an immersion system, per se known, in which the battery cells are immersed in a flow of thermoregulating fluid, for example oil.

More in detail, the container 4 of the battery unit 1 comprises an inlet opening 14 for the thermoregulating fluid, communicating with an inlet collector chamber 10 arranged below the array of battery cells, and an outlet opening 16 for the thermoregulating fluid communicating with an outlet collector chamber 12, arranged above the array of battery cells. The two chambers, inlet 10 and outlet 12 respectively, are arranged in fluid communication with each other via a plurality of spaces defined between the battery cells 2 of the array.

However, embodiments are not excluded wherein the thermoregulation system is of any other known type, such as for example air thermoregulation systems or systems comprising thermoregulation plates traversed by a thermoregulation fluid and arranged in thermal exchange with the battery cells.

Again in a per se known manner, the container 4 of the battery group comprises a venting device (not illustrated) configured to keep closed a venting opening 18 made in correspondence with a wall of the housing during normal phases of operation and functioning of the battery group, and to leave the opening 18 free in case the pressure and/or temperature in the environment defined inside the container 4 exceeds a predetermined threshold value, for example following the entry of one or more battery cells 2 into a thermal runaway condition.

In more detail, when one or more battery cells enter a thermal runaway condition, their respective vent valves open, discharging the gases produced inside the cells into the internal environment of the housing, causing an increase in pressure and temperature. When the rise in pressure and/or temperature within the container 4 is such as to deform or rupture the venting device, said hot gases are made to flow through the opening 18 and released into the environment external to the battery unit 1.

By way of example only, the venting device can be a rupture disc (so-called *burst disk)* configured to rupture or deform so as to leave free a passage through the opening 18 of the container 4, thereby placing the internal environment of the container 4 in fluid communication with an environment external to the battery group 1.

In the considered embodiment, the venting opening 18 is made in correspondence with a side wall 20 of the container 4, in particular in correspondence with the side wall 20 arranged adjacent to an end cell 32 of the cell array along the first direction A.

With particular reference to figures 7 to 8B, and based on the invention, the battery unit 1 comprises a shield 34 arranged inside the container 4 and extending facing the venting opening 18.

In particular, the shield is arranged in an intermediate position between the venting opening 18 and the battery cell 2 of the array of cells closest to the venting opening 18, which in the considered example corresponds to the end cell 32.

In other words, the shield 34 is arranged inside the housing in such a way that it is faced on one side towards a main wall 6B of the end cell 32 of the array, and on the other side towards the venting opening 18.

In the illustrated embodiment, the shield 34 is disposed within a recess 36 made in the side wall 20, and extends, substantially planar, parallel to the main walls 6B of the end cell 32.

Preferably, the shield 34 extends for the entire width of the end cell 32, meaning by the term width the footprint of the battery cell 32 along a second horizontal direction B orthogonal to the first direction A.

In particular, the shield 34 comprises an attachment portion 38 rigidly connected to the side wall 20 of the container 4, more specifically to a bottom surface 40 of the recess 36, and a free end portion 42, protruding relative to the surface 40, defining together with the top wall 26 of the container 4 a passage 44, for example for hot gases exiting from one or more battery cells 2 that have entered a thermal runaway condition.

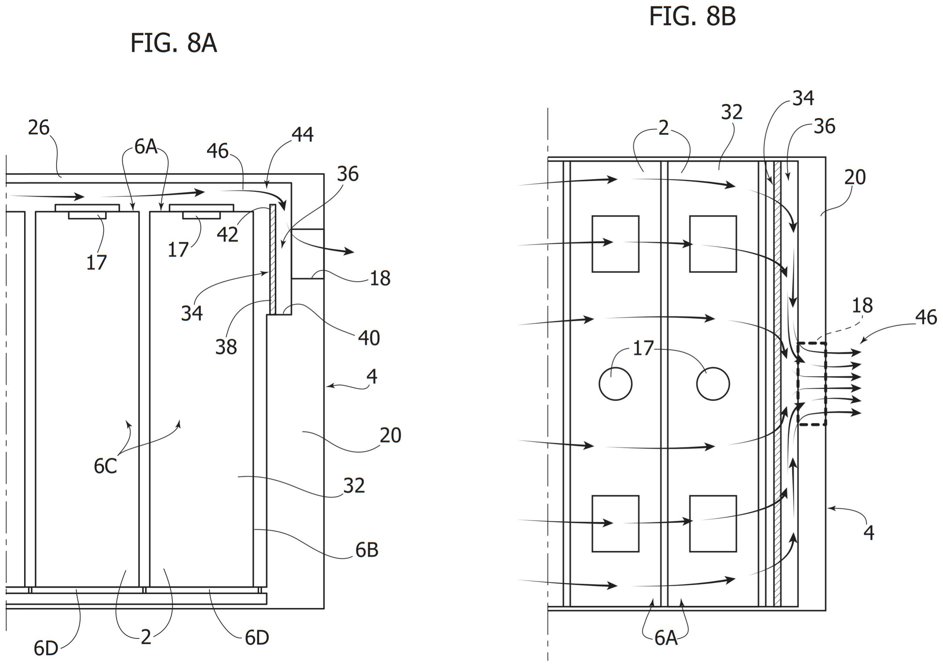

Again with reference to figures 8A and 8B, reference numeral 46 indicates the flow lines that identify the path followed by the hot gases exiting from one or more battery cells 2 that have entered thermal runaway and directed towards the vent outlet 18, left free by the venting device.

As observable, the flow lines 46, which initially extend substantially parallel to each other along the flanking direction A and above them, converge in correspondence with an area adjacent to the venting opening 18, and immediately upstream thereof. Furthermore, since such gases are at high temperatures (for example on the order of 800°C), the convergence of these flow lines determines a greater thermal load on the components in the immediate vicinity.

Therefore, the fact of providing the shield 34 interposed between the end cell 32 and the venting opening 18 allows the flow lines 46 of the gases exiting from the battery cells 2 to remain spaced apart from each other in correspondence with the end cell 32, and then to converge downstream of the shield 34, after having passed through the passage 44 defined by the free end 32 of the shield 34 and the top wall 26 of the housing.

In one or more embodiments, the free end portion 42 of the shield 34 extends towards the top wall 26 of the housing, protruding relative to a plane defined by the top wall 6A of the end cell 32.

In other words, with reference to figure 8A, the free end 42 of the shield 34 can extend up to a geometric height greater than the top wall 6A of the end cell.

In this way, the gases coming from the battery cells are forced to "go around" the obstacle represented by the free end 42 protruding upwards, leading to an upward deflection of the flow lines 46 of the gases, thus further moving the gases away from the end cell 32.

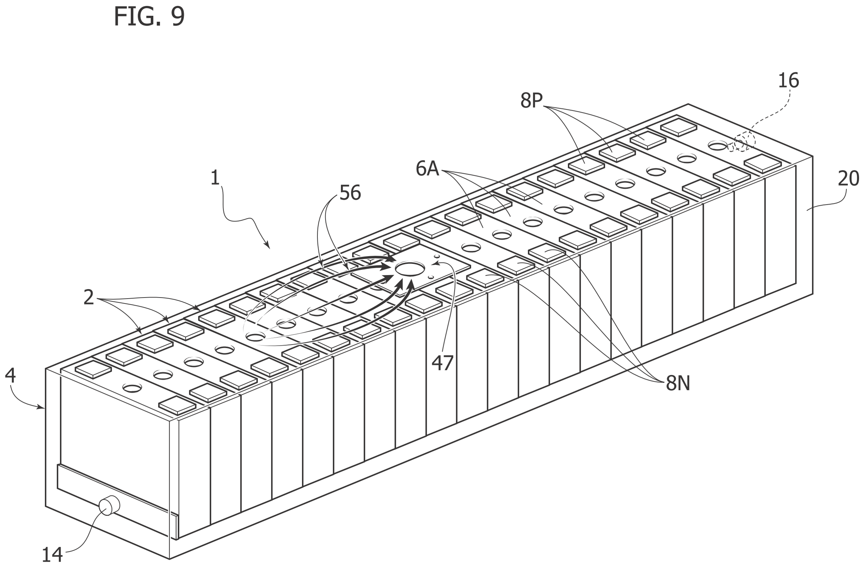

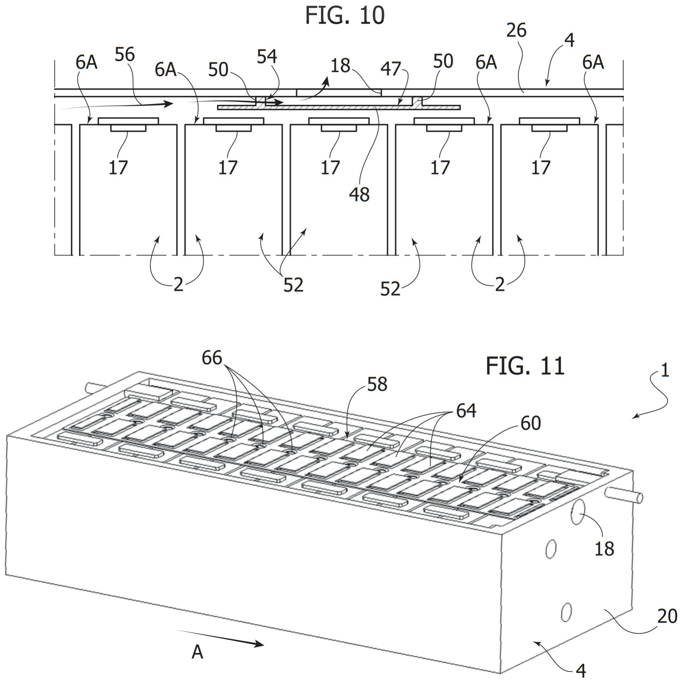

Figures 9 and 10 illustrate an alternative embodiment of the present invention. Also in this case, for simplicity, the numerical references assigned to the components of the battery unit 1 described above and illustrated in figures 1 to 5B will be maintained, for which the same meaning and validity of the same description are intended.

In particular, the considered embodiment is substantially analogous to that illustrated with reference to figures 4 to 5B, wherein the venting opening 18 is made in correspondence with the top wall 26 of the container 4.

In the illustrated example, similarly to the embodiment described with reference to figures 6 to 8B, the vent valves of the battery cells are disposed in correspondence with a top wall of the cell housing facing towards the top wall 26 of the container 4.

Again with reference to figures 9 and 10, and based on the invention, the battery unit 1 comprises a shield 47 arranged inside the container 4 and including a sheet body 48 arranged in an intermediate position between the top wall 26 of the container 4 and the array of battery cells 2 and at least one connecting element 50 configured to rigidly connect the sheet body 48 to the top wall 26 of the container 4.

In particular, the sheet body 48 of the shield 47 is such that the sheet body 48 is faced on one side towards the venting opening 18 and on the other side towards the top walls 6A of the battery cell, or cells, 2 closest to the venting opening 18 (reference numeral 52 indicates in figure 10 the battery cells 2 closest to the venting opening 18).

In the illustrated example, the at least one connecting element 50 comprises a plurality of connecting elements 50 arranged angularly spaced apart from each other around the venting opening 18.

With particular reference to figure 10, the sheet body 48 of the shield 47 extends substantially parallel and spaced apart from the top wall 26 of the container 4, so as to define a passage 54 therewith for hot gases exiting from one or more battery cells 2 and directed towards the venting opening 18.

In particular, again with reference to figures 9 and 10, reference numeral 56 indicates the flow lines that identify the path followed by the hot gases exiting from one or more battery cells 2 and directed towards the vent outlet 18, left free by the venting device.

As observable, the flow lines 56, which initially extend substantially parallel to each other along the flanking direction A and above them, converge in correspondence with an area adjacent to the venting opening 18, and immediately upstream thereof.

Also in this case, the fact of providing the shield 47 interposed between the venting opening 18 and the battery cells 52 closest to the venting opening 18 allows the flow lines 56 of the gases exiting from the battery cells 2 to remain spaced apart from each other in correspondence with areas distant from the venting opening 18, and then to converge above the shield 47, after having passed through the passage 54 defined by the sheet body 48 of the shield 47 and the top wall 26 of the housing.

In other words, the arrangement of the shield 47 is such that the flow lines 56 of the hot gases exiting from the battery cells converge only after having merged above the sheet body 48.

Therefore, the thermal load resulting from the convergence of the hot gases in proximity to the venting opening 18 is borne by the sheet body 48, thereby making it possible to shield the battery cells 52 closest to the venting opening 18.

Figures 11 to 13 illustrate a further exemplary embodiment of the present invention. Also in this case, for simplicity, the numerical references assigned to the components of the battery unit 1 described above and illustrated in figures 1 to 5B will be maintained, for which the same meaning and validity of the same description are intended.

In particular, the considered embodiment is substantially analogous to that illustrated with reference to figures 6 to 8B, wherein the venting opening 18 is made in correspondence with the side wall 20 of the container 4 in proximity to an end cell 32 of the array of cells, and wherein the vent valves of the battery cells 2 are arranged in correspondence with a top wall of the cell housing facing towards the top wall 26 of the container 4.

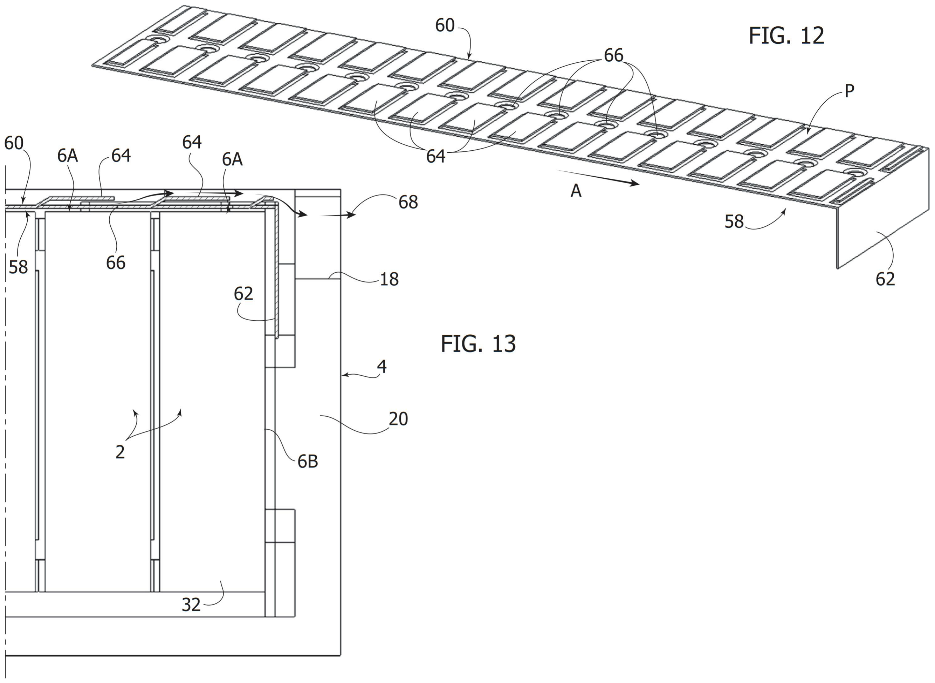

In such embodiment, the battery group 1 comprises a baffle plate 58 including a main body 60 extending above the battery cells 2 in an intermediate position between the top wall 26 of the housing and the top walls 6A of the cells 2, and a folded portion 62 arranged in correspondence with an end of the main body, and extending in an intermediate position between the end cell 32 of the array of cells and the side wall 20 of the container 4 on which the venting opening 18 is made (see figure 13), in such a way as to face on one side a main wall 6B of the end cell 32 of the array, and on the other side the venting opening 18.

In a manner entirely analogous to the embodiments described respectively with reference to figures 6 to 8B and with reference to figures 9 and 10, the folded portion 62 substantially fulfills the function of a shield for the hot gases coming from the battery cells and directed towards the venting opening 18.

Also in this case, in fact, the folded portion 62 is such as to shield the end cell 32 from the area immediately upstream of the venting opening 18, in correspondence with which the hot gases concentrate before exiting the container 4 and which represents the area of greatest thermal stress for the battery cells.

Again with reference to figures 11 to 13, the main body 60 of the baffle plate 58 further comprises, for each battery cell 2 of the array, a through opening 66 made in correspondence with the venting valve 17 of the respective cell 2, and configured to allow a passage of gases exiting from the battery cells towards an environment comprised between the main body 60 and the top wall 26 of the container 4,

In the illustrated embodiment, the main body 60 extends substantially planar along a plane P for at least a portion of the longitudinal extent, preferably for the entire longitudinal extent, of the array of cells along the flanking direction A, and comprises, for each battery cell 2, at least one deflector 64, for example in the form of a fin, protruding from the plane P towards the top wall 26 of the container 4.

In view of the preceding description, the main body 60 of the plate 58 is such that when one or more battery cells 2 enter a thermal runaway condition, the gases exiting from the vent valves 17 are conveyed through the through openings 66 towards the environment comprised between the main body 60 and the top wall 26 of the container 4, and from there flow towards the venting opening 18, being kept spaced apart from the battery cells 2 by means of the deflectors 64.

By way of example only, figure 13 illustrates a condition in which a battery cell 2, in particular a battery cell disposed upstream of the end cell relative to the venting opening 18, has entered thermal runaway. In this example, reference numeral 68 indicates one of the flow lines that identify the path followed by the gases exiting from a battery cell up to the venting opening 18.

As observable, the flow line 68 extends starting from the vent valve (not illustrated) of the battery cell 2 that has entered thermal runaway, then develops above the main body 60 up to the end of the array of cells and, finally, is deflected to enter the vent opening.

In particular, whenever the gases flow above a battery cell they are deflected upwards, and thus towards the top wall 26 of the container 4, by the deflectors 64 of the baffle plate 58.

As anticipated in the preceding description, the provision of the folded portion 62 allows distancing from the end cell 32 of the array of cells the area immediately downstream of the venting opening 18 where the flow lines 68 of the hot gases concentrate, determining a greater thermal load in the immediate vicinity.

The battery group 1 according to the present invention is particularly advantageous as it allows preventing the propagation of a thermal runaway condition to the functioning battery cells of the array.

In fact, thanks to the present invention it becomes possible to protect the battery cells closest to the venting opening 18 of the container 4, which are generally more subject to high thermal loads due to the confluence of hot gases coming from the battery cells in a very concentrated area.

In particular, the protective action for these battery cells is achieved firstly by moving the battery cells most at risk away from the area of confluence of the hot gases coming from the cells and, secondly, by interposing between this area and the battery cells a physical wall capable of withstanding the thermal load applied by the hot gases exiting the container 4.

Naturally, the principle of the invention remaining unchanged, the details of construction and the embodiments may vary widely with respect to what has been described and illustrated by way of example only, without thereby departing from the scope of the present invention, as defined in the appended claims.

## Claims

1. Electric battery group (1), comprising an array of battery cells (2) arranged side by side with each other within a container (4) of the electric battery unit,
wherein each cell (2) comprises an outer casing (6) provided with a venting valve (17) configured for the exhaust from the casing of gases produced within the cell when said gases exceed a predetermined pressure and/or a predetermined temperature, as a result of an entry into a thermal runaway condition,
wherein said container (4) of the battery unit comprises a venting device, configured to break or deform so as to open a venting opening (18) arranged on a wall (20, 26) of the container (4) in case the pressure and/or the temperature within the container (4) exceeds predetermined threshold values,
**characterized in that** the electric battery unit (1) comprises a shield (34, 47, 62) arranged within said container (4) and extending facing said venting opening (18) of the container (4) at an intermediate position between the venting opening (18) and the cell (2) of said array of battery cells closest to said venting opening (18),
so that, when said venting device breaks or deforms, said shield (34, 47, 62) defines, together with the walls (20, 26) of said container (4), a passage (44, 54) for the gases coming from said venting valves (17) and heading towards said venting opening (18) of the container (4), said passage (44, 54) being distanced from the battery cell (2) closest to the venting opening (18).

2. Electric battery unit according to claim 1, wherein said venting opening (18) is arranged at a side wall (20) of said container (4), and wherein the cell closest to said venting opening (18) is an end cell (32) of said array of battery cells,
the shield (34) comprising a mounting portion (38) firmly connected to said side wall (20) of the container (4) and a free end portion (42) defining, together with an upper wall (26) of the container (4), said passage for the gas exiting said venting valves (17) of the cells towards said venting opening (18).

3. Electric battery unit according to claim 2, wherein said shield (34) is arranged within a recess (36) arranged in said side wall (20) of the container (4).

4. Electric battery unit according to claim 2, wherein said shield (34) extends along the entire extension of the array of battery cells along a direction orthogonal to a flanking direction (A) of the cells.

5. Electric battery unit according to claim 2, wherein the casing (6) of the end cell (32) of said array of battery cells comprises an upper wall (6A) facing said upper wall (26) of the container (4),
wherein said free end portion (42) of said shield protrudes above said upper wall (6A) of the casing (6) of the end cell (32).

6. Electric battery unit according to claim 1, wherein said venting opening (18) is arranged at an upper wall (26) of said container (4), wherein the venting valves (17) of said battery cells (2) are arranged at un upper wall (2) of the casing (6) of the battery cells (2) facing said upper wall (26) of the container (4),
said shield (47) extending at an intermediate position between said venting opening (18) of the container (4) and the upper wall (6A) of the casing (6) of one or more cells close to said venting opening (18).

7. Electric battery unit according to claim 6, wherein said shield (47) comprises a sheet body (48) extending substantially parallel to, and distanced from, said upper wall (26) of the container (4), and a plurality of connecting elements (50) configured to connect said sheet body (48) to the upper wall (26) of the container (4).

8. Electric battery unit according to claim 1, wherein the venting valves (17) of the battery cells (2) are arranged at an upper wall (6A) of the casing (6) of the cells facing the upper wall (26) of the container (4), wherein the venting opening (18) is arranged at a side wall (20) of the container (4),
the battery unit (1) comprising a baffle plate (58) including a main body (60) extending above said array of battery cells at an intermediate position between the cells (2) and the upper wall (26) of the container (4), and a folded portion (62) defining said shield arranged at an end of said main body (60) and extending between said venting opening (18) and an end cell (32) of said array of battery cells,
wherein the main body (60) of the baffle plate (58) comprises through openings (66) arranged at the venting valves (17) of the battery cells, and configured to allow a passage for the gas exiting the battery cells towards an environment comprised between said baffle plate (58) and said upper wall (26) of the container (4),
so that, when a battery cell (2) enters a thermal runaway condition, the gases exiting the respective venting valve (17) are channeled towards said environment comprised between the baffle plate (58) and said upper wall (26) of the container (4), and flow within said environment up to the venting opening (18) of the container (4).

9. Electric battery unit according to claim 8, wherein said main body (60) of the baffle plate (58) comprises, for each battery cell (2), at least one baffle (64), in the form of a flap, protruding with respect to the main body (60) towards the upper wall (26) of the container (4),
so that, when a battery cell enters a thermal runaway condition, the baffles (64) of the baffle plate (58) push away the gases, exiting said cell and heading the venting opening (18) of the container (4), from the functioning battery cells arranged along the flow path of the gases.
